# EUROPÄISCHE PATENTANMELDUNG

(11) **EP 2 522 787 A2**
(43) Veröffentlichungstag der Anmeldung: **14.11.2012**
(21) Anmeldenummer: 12165103.8
(22) Anmeldetag: 23.04.2012
(51) Int. Cl.: E04B 9/00, F24F 5/00

(54) **Befestigungselement**

(30) Priorität: 09.05.2011 AT 2642011 U
(71) Anmelder: Harreither, Raimund, 3334 Gaflenz (AT)
(72) Erfinder: Harreither, Raimund, 3334 Gaflenz (AT)
(74) Vertreter: Schwarz & Partner

(57) **Zusammenfassung**

Die Erfindung betrifft ein Befestigungselement (1, 1.1) zur Befestigung eines flächigen Klimatisierungselements (2) an einem Profilträger (3) einer Decken- oder Wandunterkonstruktion, wobei das Befestigungselement (1, 1.1) als Doppelhaken geformt an seinem einen freien Ende (10) mit einem Profilträgerhaken (11) zum Einhängen am Profilträger (3) sowie an seinem anderen freien Ende (12) mit einem Klimatisierungselementhaken (13) zum Einhängen in einem Durchgangsloch (20) des Klimatisierungselements (2) ausgestattet ist. Ein Mittelabschnitt (17) des Befestigungselements (1, 1.1) weist eine mit einem Profilträgerabschnitt (30), insbesondere einem Abschnitt eines Profilträgerschenkels (31), korrespondierende Kontur auf.

## Beschreibung

Die Erfindung betrifft ein Befestigungselement zur Befestigung eines flächigen Klimatisierungselements an einem Profilträger einer Decken- oder Wandunterkonstruktion.

Aus dem Stand der Technik sind zahlreiche Ausführungsvarianten von Halterungselementen zur Befestigung von Decken- oder Wandelementen bekannt.

Beispielsweise ist aus DE 200 15 765 U1 ein Deckenelement bekannt, bei dem federnde Schnappelemente durch Einschnappen in Öffnungen von Haltelementen einer Deckenunterkonstruktion lösbar verbindbar sind. Von Nachteil ist, dass die Schnappelemente aufwendig hergestellt sind und an der Unterkonstruktion exakt angeordnet sein müssen, damit es nicht zu unerwünscht großen Fugen zwischen benachbart verlegten Deckenelementen kommt. Bei Lösen der Schnappelemente beispielsweise für Revisionsarbeiten werden die Deckenelemente von der Halterung nicht mehr gehalten, was einen weiteren Nachteil dieser Ausführung darstellt.

Weiters sind aus DE 10 2009 047 415 A1 Montagehilfselemente zum Befestigen von Platten, insbesondere von Gipskartonplatten, an einer Unterkonstruktion bekannt. Die Montagehilfselemente werden dazu mit einem Klemmbügel an den Rändern der Platten aufgesteckt, wobei eine Grundplatte des Montagehilfselements zur Befestigung der Platten über den Plattenrand vorragt. Die Montagehilfselemente verbleiben im Sinne eines verlorenen Bauteils dabei vollständig in einer aus den Platten hergestellten Wand, Decke oder Verkleidung.

Nachteilig an diesen Halterungselementen ist, dass die Deckenplattenelemente sehr mühsam erst vor Ort in ihrer Befestigungslage mit den Montagehilfselementen verbunden und an einer Unterkonstruktion befestigt werden können. In dieser Ausführung müssen bei Revisionsarbeiten die befestigten Platten ebenfalls komplett den Montagehilfselementen entnommen werden. Dazu müssen die Platten aus den Klemmbügelhalterungen der Montagehilfselemente herausgezogen werden, wobei nachteilig Beschädigungen der Platten auftreten können.

Bei Verwendung derartiger bekannter Halterungselemente zur Befestigung von Decken-oder Wandklimatisierungselementen sind bei Revisionsarbeiten jedenfalls mehrere Personen zur Entnahme sowie zur Wiederbefestigung der Platten erforderlich, was notwendige Revisionsarbeiten verteuert und somit einen weiteren Nachteil von aus dem Stand der Technik bekannten Halterungselementen für Plattenbefestigungen darstellt.

Insbesondere bei schweren Decken- oder Wandklimatisierungselementen, die zur Klimatisierung beispielsweise von Wohn- oder Büroräumen dienen und mit einem Heiz-oder Kühlmedium durchströmbar sind, ist es erforderlich, die Platten während Revisionsarbeiten möglichst an Ort und Stelle zu lagern und gleichzeitig Zugang zu den Installationsleitungen, die üblicherweise an der Rückseite hinter bzw. über den Platten angeordnet sind, zu erlangen. Die einzelnen Klimatisierungselemente sind üblicherweise zur Versorgung mit einem Heiz- oder Kühlmedium mit Verbindungsleitungen verbunden. Bei Revisionsarbeiten muss daher besonders Acht gegeben werden, dass die Verbindungsleitungen, die an den plattenförmigen Klimatisierungselementen befestigt sind, nicht beschädigt werden.

Die aus dem Stand der Technik bekannten Halterungselemente für Gipskartonplatten sind daher für die Befestigung von Klimatisierungselementen nicht geeignet.

Die vorliegende Erfindung stellt sich daher die Aufgabe, für Halterungselemente der eingangs genannten Art die aus dem Stand der Technik bekannten Nachteile zu vermeiden, und dazu ein Befestigungselement zu schaffen, das eine Lagerung von Decken- oder Wandklimatisierungselementen direkt am Einbauort ermöglicht und dennoch eine gute Zugänglichkeit der meist hinter bzw. über den Platten gelegenen Installationen gewährleistet.

Erfindungsgemäß wird diese Aufgabe bei einem gattungsmäßigen Befestigungselement durch die im kennzeichnenden Teil des Patentanspruchs 1 angegebenen Merkmale gelöst. Besonders bevorzugte Ausführungsformen und Weiterbildungen der Erfindung sind Gegenstand der Unteransprüche.

Vorteilhaft ist bei einem erfindungsgemäßen Befestigungselement zur Befestigung eines flächigen Klimatisierungselements an einem Profilträger einer Decken- oder Wandunterkonstruktion das Befestigungselement als Doppelhaken geformt an seinem einen freien Ende mit einem Profilträgerhaken zum Einhängen am Profilträger sowie an seinem anderen freien Ende mit einem Klimatisierungselementhaken zum Einhängen in einem Durchgangsloch des Klimatisierungselements ausgestattet, wobei ein Mittelabschnitt des Befestigungselements eine mit einem Profilträgerabschnitt, insbesondere einem Abschnitt eines Profilträgerschenkels, korrespondierende Kontur aufweist.

Die Verwendung von erfindungsgemäßen Befestigungselementen zur Befestigung von Klimatisierungselementen an Trägerkonstruktionen von Trockenbau- und Abhängesystemen für abgehängte Decken oder Zwischenwände bietet zahlreiche Vorteile. Die Befestigungselemente sind kostengünstig in ihrer Herstellung und können besonders einfach und komfortabel mit ihrem ersten freien Ende, das als Profilträgerhaken zum Einhängen an einem bereits zuvor an einer Wand oder Decke eines Gebäudes befestigten Profilträgers eingehängt werden.

Ein an den Profilträgerhaken anschließender Mittelabschnitt des Befestigungselements ist derart geformt, dass seine Kontur zumindest mit der Kontur eines Profilträgerabschnitts korrespondiert. Ist der entsprechende Profilträger des Trockenbau- oder Abhängesystems beispielsweise als U-förmiger Profilträger gestaltet, so wird das erfindungsgemäße Befestigungselement vorzugsweise so gewählt, dass sein Mittelabschnitt zumindest abschnittsweise an einem Profilträgerschenkel des Profilträgers anliegt. Vorteilhaft wird das Befestigungselement in am Profilträger eingehängter Lage von diesem im Bereich seines Mittelabschnitts statisch unterstützt.

An seinem anderen freien Ende ist das erfindungsgemäße Befestigungselement mit einem Klimatisierungselementhaken zum Einhängen in einem Durchgangsloch des Klimatisierungselements versehen. Somit ist die Montage eines Klimatisierungselements an einem Befestigungselement besonders einfach.

Bei der Montage der flächigen Klimatisierungselemente und insbesondere bei erforderlichen Revisionsarbeiten wird ein hoher Freiheitsgrad für deren Justierbarkeit gefordert, um die Klimatisierungselemente in bereits bestehende angrenzende Trockenbau- oder Abhängesysteme integrieren zu können. Die Verwendung der erfindungsgemäßen Befestigungselemente erlaubt eine größtmögliche Justierbarkeit für eine passgenaue Befestigung der Klimatisierungselemente. Jedes Befestigungselement kann an dem Profilträger, an dem es durch Einhängen befestigt ist, erforderlichenfalls seitlich in Längsrichtung des Profilträgers verschoben oder verschwenkt werden. Ebenso ist es denkbar, bei Klimatisierungselementen, die mit mehreren, voneinander beabstandeten Durchgangslöchern, die vorzugsweise an deren Rand- oder Eckenabschnitten angeordnet sind, jenes Durchgangsloch zum Einhaken bzw. Befestigen am Klimatisierungselementhaken eines Befestigungselements auszuwählen, das für die jeweilige Montagesituation am besten geeignet ist.

Besonders zweckmäßig sind bei einem Befestigungselement gemäß der Erfindung der Profilträgerhaken und der Klimatisierungselementhaken in Bezug auf den Mittelabschnitt in jeweils von diesem entgegengesetzte Richtungen abstehend angeordnet.

In dieser Ausführung sind Profilträgerhaken und Klimatisierungselementhaken im Wesentlichen S-förmig am Mittelabschnitt des Befestigungselements angeordnet und stehen gegengleich von diesem ab.

Vorteilhaft ist bei einem erfindungsgemäßen Befestigungselement in einer Ausführungsvariante die Länge seines Mittelabschnitts kleiner gleich der Abschnittslänge eines Trägerschenkels des Profilträgers.

In dieser bevorzugten Ausführung ist die Länge des Mittelabschnitts so bemessen, dass sie mit der Abschnittslänge eines Trägerschenkels übereinstimmt oder etwas kleiner als die Abschnittslänge eines Trägerschenkels ist. Somit steht ein möglichst großer Längenabschnitt zur Verfügung, an dem der Mittelabschnitt an der Außenfläche des Trägerschenkels anliegt und im Lastfall mit eingehängtem Klimatisierungselement vorteilhaft vom Profilträger statisch unterstützt wird. Zweckmäßig ragt das mit einem Klimatisierungselementhaken versehene freie Ende des Befestigungselements dabei nicht über den Profilträger hervor.

Von Vorteil steht bei einem erfindungsgemäßen Befestigungselement ein daran eingehängtes Klimatisierungselement in Einbaulage gegenüber einer Stirnseite des Profilträgers nach unten vor.

In dieser Ausführung wird durch die nachfolgende Beplankung des Klimatisierungselements, also beispielsweise durch das Verkleiden des Klimaelements an dessen Unterseite mit einer Abdeckplatte, die am Profilträger befestigt wird, das Klimatisierungselement durch die Beplankung hochgehoben. Vorteilhaft wird somit eine verbesserte Temperaturleitung zwischen dem Klimatisierungselement und der Beplankung erzielt. Das Klimatisierungselement liegt im Wesentlichen vollflächig an der Beplankung an.

In einer weiteren bevorzugten Ausführungsvariante der Erfindung schließt bei einem Befestigungselement in Einbaulage der Klimatisierungselementhaken bündig mit der Stirnseite des Profilträgers ab.

Der Klimatisierungselementhaken reicht bündig bis an die Vorderseite des Profilträgers, steht aber vorteilhaft nicht über die Stirnseite des Profilträgers vor. Somit können beispielsweise Decken- oder Wandplatten als Sichtschalung an der Stirnseite des Profilträgers besonders einfach befestigt werden, ohne dass dabei auf die Befestigungselemente Rücksicht genommen werden muss.

Vorteilhaft ist bei einem Befestigungselement gemäß der Erfindung der Klimatisierungselementhaken aus zwei im Wesentlichen geraden Hakenabschnitten mit einem dazwischen liegenden Hakenwinkel gestaltet.

In einer Weiterbildung der Erfindung beträgt bei einem Befestigungselement der Hakenwinkel zwischen den beiden Hakenabschnitten des Klimatisierungselementhakens von 90° bis 150°.

In einer bevorzugten Ausführungsvariante der Erfindung ist das Befestigungselement zumindest abschnittsweise streifenförmig gestaltet.

In dieser Variante eines streifenförmigen Befestigungselements können am Befestigungselement besonders schwere Lasten eingehängt werden. Insbesondere bei einem aus einem metallischen Werkstoff gefertigten Befestigungselement ist dies zutreffend. Weiters bietet ein durchgehend streifenförmig gestaltetes Befestigungselement, bei dem somit auch der Profilträgerhaken sowie der Klimatisierungselementhaken streifenförmig mit einer bestimmten Streifenbreite ausgeführt sind, den Vorteil, dass aufgrund der Streifenbreite ein unbeabsichtigtes seitliches Verschwenken des Befestigungselements in Bezug auf den Profilträger, an dem das Befestigungselement eingehängt ist, vermieden wird.

Ebenso ist es im Rahmen der Erfindung denkbar, das beispielsweise nur der Mittelabschnitt des Befestigungselements mit einer größeren Streifenbreite ausgeführt ist, der daran angrenzende Profilträgerhaken und/oder der Klimatisierungselementhaken an ihrem jeweiligen freien Ende allerdings spitz zulaufen. Diese Ausführung bietet den Vorteil, dass aufgrund der Materialbreite im Mittelabschnitt eine besonders große Auflagefläche zum Abstützen des Befestigungselements am Profilträger zur Verfügung steht. Der Profilträgerhaken und/oder der Klimatisierungselementhaken sind hier vorteilhaft spitz zulaufend gestaltet, um eine flexible Justierung beim Einhängen am Profilträger bzw. ein komfortables Einhängen des Klimatisierungselementhakens in einem Durchgangsloch des Klimatisierungselements zu ermöglichen.

In einer weiteren Ausführungsvariante ist es möglich, ein erfindungsgemäßes Befestigungselement aus einem Rundmaterial zu formen.

Als Rundmaterial kann beispielsweise ein Metalldraht verwendet werden, aus dem das Befestigungselement geformt ist.

Im Rahmen der Erfindung sind in einer besonders vorteilhaften Ausführung zumindest ein erfindungsgemäßes Befestigungselement und ein flächiges Klimatisierungselement mit Durchgangslöchern zu einem Befestigungssystem kombinierbar. Die Durchgangslöcher sind dabei vorzugsweise in Randbereichen und/oder Eckbereichen des Klimatisierungselements angeordnet.

Vorteilhaft bildet bei einem Befestigungssystem gemäß der Erfindung der Klimatisierungselementhaken des zumindest einen Befestigungselements für das daran einhängbare Klimatisierungselement ein Auflager, an dem das Klimatisierungselement um einen Klappwinkel klappbar beweglich gelagert ist.

Insbesondere bei der Montage und während Revisionsarbeiten bietet ein Befestigungselement, dessen Klimatisierungselementhaken ein Auflager für das daran klappbar eingehängte Klimatisierungselement bildet, große Vorteile. Die Montage bzw. Revision des Klimatisierungselements kann somit mit weniger Personal erfolgen, da das Klimatisierungselement am Befestigungselement klappbar befestigt bleibt und während der Arbeiten nicht gehalten werden muss. Somit sind weiters auch die Verletzungsgefahr sowie die Gefahr, ein Klimatisierungselement während der Montage- oder Revisionsarbeiten unbeabsichtigt zu beschädigen, deutlich geringer. Verbindungsleitungen zwischen den einzelnen Klimatisierungselementen, die mit einem Kühl- oder einem Heizmedium befüllt sind, werden durch die klappbar an einem oder an mehreren nebeneinander angeordneten Klimatisierungselementhaken gelagerten Klimatisierungselemente vorteilhaft besonders schonend verformt. Leckagen oder ein Knicken der befüllten Verbindungsleitungen werden somit vermieden.

Vorteilhaft sind dazu die Anschlüsse der medienbefüllten Verbindungsleitungen nahe der Klappachse bzw. in Randnähe am Klimatisierungselement angeordnet. Somit wird ein großer Schwenkweg der Verbindungsleitungen beim Abklappen der Klimatisierungselemente vermieden.

Je nach Größe des zu befestigenden Klimatisierungselements können auch mehrere voneinander beabstandete Befestigungselemente erforderlich sein. Diese mehreren Befestigungselemente sind dabei vorteilhaft an demselben Randabschnitt des Klimatisierungselements befestigt und bilden somit eine Klappachse. Somit bietet das erfindungsgemäße Befestigungssystem die Möglichkeit, Klimatisierungselemente in jeder beliebigen Lage, also beispielsweise waagrecht oder senkrecht an den Befestigungselementen aufzuhängen.

Zweckmäßig beträgt bei einem Befestigungssystem gemäß der Erfindung der Klappwinkel des Klimatisierungselements gegenüber einer Ebene des Mittelabschnitts des Befestigungselements von 0° bis 90°.

Von Vorteil steht bei einem Befestigungssystem gemäß der Erfindung das Klimatisierungselement in am Befestigungselement eingehängter Lage gegenüber dem Profilträger vor.

Wie bereits zuvor erwähnt, wird in dieser Ausführung durch die nachfolgende Beplankung des Klimatisierungselements, also beispielsweise durch das Verkleiden des Klimaelements an dessen Unterseite mit einer Gipskartonplatte, die am Profilträger befestigt wird, das Klimatisierungselement durch die Beplankung hochgehoben. Vorteilhaft wird somit eine verbesserte Temperaturleitung zwischen dem Klimatisierungselement und der Beplankung erzielt. Das Klimatisierungselement liegt im Wesentlichen vollflächig an der Beplankung an.

Im Rahmen der Erfindung ist es vorteilhaft möglich, ein erfindungsgemäßes Befestigungselement zur Befestigung eines Klimatisierungselements an einem Profilträger einer Decken- oder Wandkonstruktion zu verwenden.

Weitere Einzelheiten, Merkmale und Vorteile der Erfindung ergeben sich aus der nachfolgenden Erläuterung der in der Zeichnung schematisch dargestellten Ausführungsbeispiele. In den Zeichnungen zeigen:
- Fig. 1 in einer Seitenansicht im Schnitt ein erfindungsgemäßes Befestigungselement, das an seinem einen freien Ende an einem Profilträger eingehängt ist und an seinem anderen freien Ende zur klappbar beweglichen Halterung eines Klimatisierungselements dient;
- Fig. 2 in einer isometrischen Ansicht schräg von der Seite eine erfindungsgemäße erste Ausführungsvariante eines Befestigungselements;
- Fig. 3 in einer isometrischen Ansicht schräg von der Seite eine erfindungsgemäße zweite Ausführungsvariante eines Befestigungselements;
- Fig. 4 in einer Schnittansicht von der Seite ein Befestigungssystem, umfassend ein erfindungsgemäßes Befestigungselement mit einem daran eingehängten, in Einbaulage geklappten Klimatisierungselement;
- Fig. 5 die in Fig. 4 dargestellte Einbausituation, wobei zusätzlich eine Abdeckplatte als Untersichtschalung angeordnet ist.

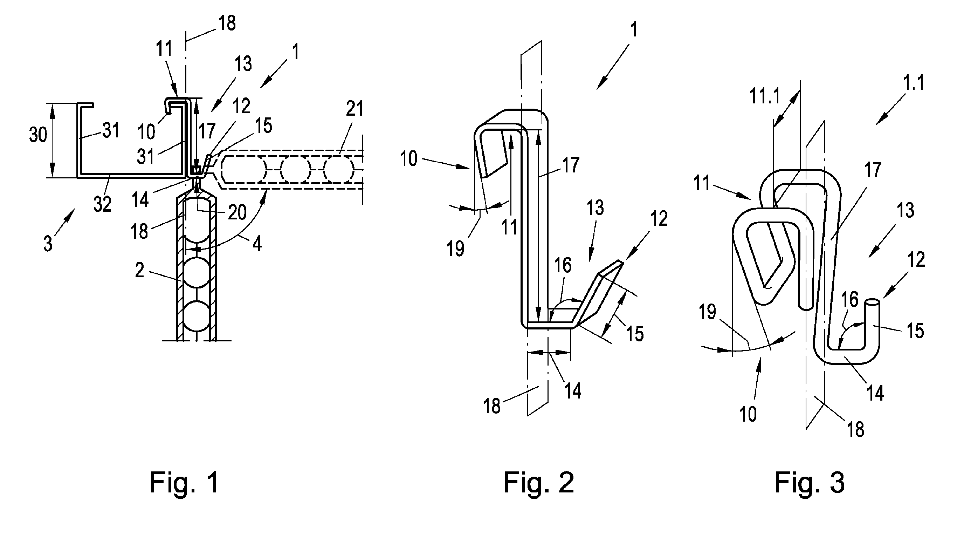

In Fig. 1 ist in einer Seitenansicht im Schnitt ein erfindungsgemäßes Befestigungselement 1 dargestellt, das an seinem einen freien Ende 10 mit einem Profilträgerhaken 11 an einem Profilträger 3 einer Wand- oder Deckenkonstruktion eingehängt ist. An seinem anderen freien Ende 12 ist das Befestigungselement 1 mit einem Klimatisierungselementhaken 13 versehen, der zur klappbar beweglichen Halterung eines Klimatisierungselements 2 dient.

Der Klimatisierungselementhaken 13 ist dabei so geformt, dass er mit seinem vorderen freien Ende 12 in einem Durchgangsloch 20, das hier laschenartig am Rand des Klimatisierungselements 2 angeordnet ist, einhängbar ist.

Wie in Fig. 2 deutlich erkennbar ist in der dort gezeigten Ausführung der Klimatisierungselementhaken 13 aus zwei im Wesentlichen geraden Hakenabschnitten 14 und 15, die in einem Hakenwinkel 16 zueinander angeordnet sind, gestaltet.

Zwischen dem Profilträgerhaken 11 und dem Klimatisierungselementhaken 13 ist am Befestigungselement 1 ein Mittelabschnitt 17 angeordnet, der eine mit einem Profilträgerabschnitt 30 korrespondierende Kontur aufweist.

Wie in Fig. 1 dargestellt, liegt das Befestigungselement 1 in am Profilträger 3 eingehängter Lage im Bereich des Mittelabschnitts 17 an der Außenseite eines Profilträgerschenkels 31 an. Der Mittelabschnitt 17 ist hier als ein im Wesentlichen ebener Abschnitt des Befestigungselements 1 gestaltet, welcher in einer Ebene 18 liegt.

In Einbaulage schließt der Klimatisierungselementhaken 13 bündig mit der Vorderseite bzw. Stirnseite 32 des Profilträgers 3 ab.

Das in Fig. 1 angedeutete Klimatisierungselement 2, welches beispielsweise für die Verwendung als Heiz- oder Kühldeckenelement vorgesehen ist, befindet sich in eingehängter Lage am Klimatisierungselementhaken 13 senkrecht nach unten hängend und somit etwa in Richtung der Ebene 18 des Mittelabschnitts 17 des Befestigungselements 1. In dieser Position können beispielsweise Installationsarbeiten am Klimatisierungselement 2 besonders komfortabel durchgeführt. Anschlüsse und Verbindungsleitungen zur Zufuhr und Abfuhr von Heiz- bzw. Kühlmedium zum Klimatisierungselement 2 sind der Übersicht halber in den Figuren nicht dargestellt.

Nach erfolgter Installation wird das Klimatisierungselement um einen Klappwinkel 4 gegenüber der Ebene 18 des Mittelabschnitts 17 in seine spätere Einbaulage 21 geklappt, die in Fig. 1 strichliert angedeutet ist.

In Fig. 2 ist eine erfindungsgemäße Ausführungsvariante eines Befestigungselements 1 gezeigt, welches streifenförmig gestaltet ist. Abhängig von der Werkstoffwahl des Befestigungselements 1 wird in dieser Gestaltungsvariante ein besonders robustes Befestigungselement 1 bereit gestellt, welches als Aufhängung für schwere Bauteile dienen kann. Der Schenkel des Profilträgerwinkels 11 ist hier um einen Winkel 19 von beispielsweise 20° gegenüber einer Parallelen zur Ebene 18 des Mittelabschnitts 17 geneigt. Somit wird gewährleistet, dass beim senkrechten Hochheben das Befestigungselement 1 nicht versehentlich aus seiner an einem Profilträger eingehängten Lage ausgehängt wird. Der Profilträger ist in Fig. 2 der Übersichtlichkeit wegen nicht dargestellt.

Fig. 3 zeigt eine weitere erfindungsgemäße Ausführungsvariante eines Befestigungselements 1.1, welches durchgehend aus einem Rundmaterial, beispielsweise aus einem Metalldraht, geformt ist. Vorteilhaft weist der Profilträgerhaken 11 eine Hakenbreite 11.1 auf, weshalb das Befestigungselement 1.1 besonders sicher und ohne seitliches Verschwenken an einem Profilträger einhängbar ist. Der Profilträger ist in Fig. 3 nicht dargestellt.

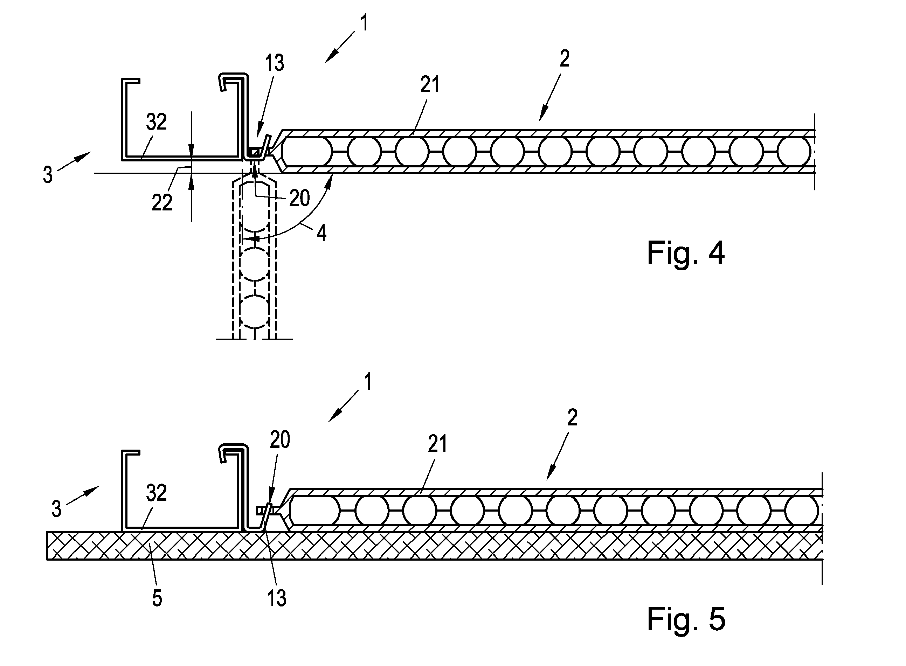

Fig. 4 stellt in einer Schnittansicht von der Seite ein Befestigungssystem, umfassend ein erfindungsgemäßes Befestigungselement 1 mit einem daran eingehängten, in Einbaulage 21 um einen Klappwinkel 4 klappbaren Klimatisierungselement 2 dar. In Einbaulage 21 befindet sich das Klimatisierungselement 2 sodann in einer horizontalen Lage als flächiges Element einer abgehängten Decke, wobei das Klimatisierungselement 2 um einen Höhenabschnitt 22 gegenüber der Stirnseite 32 des Profilträgers 3 nach unten vorsteht. Der Klimatisierungselementhaken 13 bildet dabei für die Klappbewegung des Klimatisierungselements 2 ein Auflager.

Fig. 5 zeigt nochmals die in Fig. 4 dargestellte Einbausituation, wobei eine Abdeckplatte 5 als Untersichtschalung bzw. Beplankung an der Stirnseite 32 des Profilträgers 3 befestigt ist. Der Profilträger 3, das Klimatisierungselement 2 sowie das Befestigungselement 1, welches hier bündig mit der Stirnseite 32 des Profilträgers abschließt, werden durch die Abdeckplatte 5 für einen Betrachter unsichtbar verdeckt. Vorteilhaft wird bei der Befestigung der Abdeckplatte 5 am Profilträger 3 das Klimatisierungselement 2 um den in Fig. 4 eingezeichneten Höhenabschnitt 22 gehoben. Das Klimatisierungselement 2 liegt somit flächig an der Abdeckplatte 5 auf, wodurch der Wärmeübergang vom Klimatisierungselement 2 durch die Abdeckplatte 5 hindurch in die Umgebung erhöht wird.

Ebenso ist es denkbar, ein erfindungsgemäßes Befestigungselement zur Befestigung eines flächigen Klimatisierungselements an einer Wandkonstruktion zu verwenden. Diese Verwendung als Halterung einer Wandheizung oder Wandkühlung mit einem nach unten hängenden Klimatisierungselements ist in den Abbildungen allerdings nicht explizit dargestellt.

### Liste der Positionsnummern:

- 1: Befestigungselement (bzw. Variante 1.1)
- 10: freies Ende des Befestigungselements
- 11: Profilträgerhaken
- 11.1: Breite des Profilträgerhakens
- 12: weiteres freies Ende des Befestigungselements
- 13: Klimatisierungselementhaken
- 14: gerader Hakenabschnitt des Klimatisierungselementhakens
- 15: gerader Hakenabschnitt des Klimatisierungselementhakens
- 16: Hakenwinkel zwischen den beiden Klimatisierungselementhakenabschnitten
- 17: Mittelabschnitt des Befestigungselements
- 18: Ebene des Mittelabschnitts
- 19: Winkel des Profilträgerhakens
- 2: Klimatisierungselement
- 20: Durchgangsloch des Klimatisierungselements
- 21: Einbaulage des Klimatisierungselements
- 22: Höhenabschnitt des Klimatisierungselements
- 3: Profilträger
- 30: Profilträgerabschnitt
- 31: Profilträgerschenkel
- 32: Stirnseite des Profilträgers
- 4: Klappwinkel zwischen Klimatisierungselement und Ebene des Mittelabschnitts
- 5: Abdeckplatte

## Patentansprüche

1. Befestigungselement (1, 1.1) zur Befestigung eines flächigen Klimatisierungselements (2) an einem Profilträger (3) einer Decken- oder Wandunterkonstruktion, **dadurch gekennzeichnet, dass** das Befestigungselement (1) als Doppelhaken geformt an seinem einen freien Ende (10) mit einem Profilträgerhaken (11) zum Einhängen am Profilträger (3) sowie an seinem anderen freien Ende (12) mit einem Klimatisierungselementhaken (13) zum Einhängen in einem Durchgangsloch (20) des Klimatisierungselements (2) ausgestattet ist, wobei ein Mittelabschnitt (17) des Befestigungselements (1) eine mit einem Profilträgerabschnitt (30), insbesondere einem Abschnitt eines Profilträgerschenkels (31), korrespondierende Kontur aufweist.

2. Befestigungselement (1, 1.1) nach Anspruch 1, **dadurch gekennzeichnet, dass** der Profilträgerhaken (11) und der Klimatisierungselementhaken (13) in Bezug auf den Mittelabschnitt (17) in jeweils entgegengesetzte Richtungen von diesem abstehend angeordnet sind.

3. Befestigungselement (1, 1.1) nach Anspruch 1 oder 2, **dadurch gekennzeichnet, dass** die Länge des Mittelabschnitts (17) kleiner gleich der Abschnittslänge (30) eines Trägerschenkels (31) des Profilträgers (3) ist.

4. Befestigungselement (1, 1.1) nach einem der Ansprüche 1 bis 3, **dadurch gekennzeichnet, dass** ein daran eingehängtes Klimatisierungselement (2) in Einbaulage gegenüber einer Stirnseite (32) des Profilträgers (3) nach unten vorsteht.

5. Befestigungselement (1, 1.1) nach Anspruch 4, **dadurch gekennzeichnet, dass** in Einbaulage der Klimatisierungselementhaken (13) bündig mit der Stirnseite (32) des Profilträgers (3) abschließt.

6. Befestigungselement (1, 1.1) nach einem der Ansprüche 1 bis 5, **dadurch gekennzeichnet, dass** der Klimatisierungselementhaken (13) aus zwei im Wesentlichen geraden Hakenabschnitten (14, 15) mit einem dazwischen liegenden Hakenwinkel (16) gestaltet ist.

7. Befestigungselement (1, 1.1) nach Anspruch 6, **dadurch gekennzeichnet, dass** der Hakenwinkel (16) von 90° bis 150° beträgt.

8. Befestigungselement (1) nach einem der Ansprüche 1 bis 7, **dadurch gekennzeichnet, dass** das Befestigungselement (1) zumindest abschnittsweise streifenförmig gestaltet ist.

9. Befestigungselement (1.1) nach einem der Ansprüche 1 bis 7, **dadurch gekennzeichnet, dass** das Befestigungselement (1) aus einem Rundmaterial geformt ist.

10. Befestigungssystem, umfassend zumindest ein Befestigungselement (1, 1.1) nach einem der Ansprüche 1 bis 9 und ein flächiges Klimatisierungselement (2) mit Durchgangslöchern (20), die vorzugsweise in Randbereichen und/oder Eckbereichen des Klimatisierungselements (2) angeordnet sind.

11. Befestigungssystem nach Anspruch 10, **dadurch gekennzeichnet, dass** der Klimatisierungselementhaken (13) des zumindest einen Befestigungselements (1, 1.1) für das daran einhängbare Klimatisierungselement (2) ein Auflager bildet, an dem das Klimatisierungselement (2) um einen Klappwinkel (4) klappbar beweglich gelagert ist.

12. Befestigungssystem nach Anspruch 11, **dadurch gekennzeichnet, dass** der Klappwinkel (4) des Klimatisierungselements (2) gegenüber einer Ebene (18) des Mittelabschnitts (17) des Befestigungselements (1, 1.1) von 0° bis 90° beträgt.

13. Befestigungssystem nach einem der Ansprüche 10 bis 12, **dadurch gekennzeichnet, dass** das Klimatisierungselement (2) in eingehängter Lage gegenüber dem Profilträger (3) vorsteht.

14. Verwendung eines Befestigungselements (1, 1.1) nach einem der Ansprüche 1 bis 9 zur Befestigung eines Klimatisierungselements (2) an einem Profilträger (3) einer Decken-oder Wandkonstruktion.
